# EUROPÄISCHE PATENTSCHRIFT

(11) **EP 2 620 819 B1**
(45) Veröffentlichungstag und Bekanntmachung des Hinweises auf die Patenterteilung: **15.04.2020**
(21) Anmeldenummer: 12152209.8
(22) Anmeldetag: 24.01.2012
(51) Int. Cl.: G05B 19/042, G05B 19/418

(54) **Verfahren zur automatischen Inbetriebnahme und/oder Deaktivierung von Komponenten einer industriellen Automatisierungsanordnung**
Method for automatic commissioning and/or deactivation of components of an industrial automation assembly
Procédé de mise en service et/ou de désactivation automatiques de composants d'un agencement d'automatisation industriel

(43) Veröffentlichungstag der Anmeldung: 31.07.2013
(73) Patentinhaber: Siemens Aktiengesellschaft, 80333 München (DE)
(72) Erfinder: Bachl, Markus, 4040 Linz (AT); Brousek, Norbert, 90766 Fürth (DE); Grassmann, Boris, 96047 Bamberg (DE); Körner, Ralf, 90480 Nürnberg (DE); Schindler, Josef, 90489 Nürnberg (DE); Spannbauer, Florian, 94078 Freyung (DE); Tobisch, Dieter, 91452 Wilhermsdorf (DE); Unterhaslberger, Rainer, 84553 Halsbach (DE)

(56) Entgegenhaltungen:
- EP-A2- 0 498 645
- DE-A1- 4 133 980
- DE-A1-102008 001 777
- US-A1- 2005 273 180

## Beschreibung

Die Erfindung betrifft ein Verfahren zur automatischen Inbetriebnahme und/oder Deaktivierung von Komponenten einer industriellen Automatisierungsanordnung gemäß dem Oberbegriff des Patentanspruchs 1.

Industrielle Automatisierungsanordnungen werden zur Steuerung von Produktionsanlagen, chemischen Prozessen, Sortier- und Fördereinrichtungen etc. verwendet. Dabei können komplexe Automatisierungsanordnungen über eine Vielzahl von Sensoren, Aktoren, Steuerungseinrichtungen (CPU = Central Processing Unit; SPS = speicherprogrammierbare Steuerung) etc. verfügen. Alle diese Komponenten benötigen zu ihrem Betrieb Energie, und alle diese Komponenten benötigen zum Aktivieren bzw. Deaktivieren Zeit, die beispielsweise als Hochlaufzeit, Inbetriebnahmezeit, Deaktivierungszeit etc. bezeichnet werden kann. Als Inbetriebnahme einer Komponente soll hier also ein Vorgang bezeichnet werden, der eine Komponente von einem Leerlauf-, Standby-, Ruhe- oder sonstigen energiesparenden Modus in einen produktiven Zustand überführt, vergleichbar mit dem "Booten" oder dem "Aufwecken" eines im Standby- oder Hibernate-Modus befindlichen Personal-Computers oder dem "Hochdrehen" eines sich im Stillstand befindlichen Motors.

Oft wird eine Automatisierungsanordnung oder zumindest ein Teil davon für einen bestimmten Zeitraum nicht benötigt. Dies betrifft beispielsweise die Nachtzeit in Betrieben, die nicht rund um die Uhr produzieren, Pausenzeiten oder aber auch Teile von Produktionsanlagen, die nicht ständig benötigt werden. Solche Automatisierungsanordnungen bzw. die nicht benötigten Teile benötigen auch im "Leerlauf" Energie, so dass ein temporäres Abschalten der betroffenen Komponenten wünschenswert ist. Wegen der benötigten Zeit für eine Deaktivierung bzw. Aktivierung (Inbetriebnahme) der einzelnen Komponenten und wegen gegenseitiger Abhängigkeiten, die beispielsweise eine bestimmte Reihenfolge beim Deaktivieren oder Aktivieren eine Anzahl von Komponenten erforderlich machen, ist eine teilweise oder auch komplette temporäre Außerbetriebsetzung von komplexen Automatisierungsanordnungen ein schwieriger Vorgang, wobei immer das Risiko besteht, dass eine Abhängigkeit übersehen wird oder beispielsweise eine für eine Wieder-Inbetriebnahme erforderliche Zeit bei einer der Komponenten nicht oder nicht ausreichend berücksichtigt wird. In einem solchen Fall kann die Außerbetriebsetzung oder spätestens die Wieder-Inbetriebnahme der Automatisierungsanordnung bzw. eines Anlagenteils Probleme verursachen, deren Auswirkungen oft den Vorteil der Energieeinsparung und weitere Vorteile, die aus vermindertem Verschleiß bewegliche Anlagenteile etc. resultieren, mehr als zunichte macht. Daher ist es zumindest für kürzere Betriebspausen meist unüblich, nicht benötigte Komponenten außer Betrieb zu setzen. In den Fällen, in denen die zu erwartende Einsparung vergleichsweise hoch ist, ist das "Herunterfahren" und das spätere "Hochfahren" der Komponenten meist mit einem hohen personellen Aufwand verbunden, weil eine Automatisierung dieses Vorgangs in vielen Fällen keine befriedigenden Resultate ergibt. Es ist also ein hoher Aufwand erforderlich, um erhöhten Ausschuss, Verlust einer ganzen Produktionscharge oder sogar gefährliche Anlagenzustände mit entsprechend wirtschaftlichen Schäden zu vermeiden. Dabei ist es bekannt, eine Automatisierung des Vorgangs der Deaktivierung und des Vorgangs der Wieder-Inbetriebnahme vorzunehmen, um zumindest einige der vorgenannten Nachteile zu eliminieren. Eine Programmierung dieser Vorgänge nimmt ein Anwender dabei anhand von Erfahrungswerten vor. Dabei sind oft sehr hohe (zeitliche) Reserven einzuhalten, um den jeweiligen Vorgang mit der erforderlichen Betriebssicherheit durchführen zu können. Probleme entstehen beispielsweise, wenn sich Betriebsparameter ändern, weil diese oft im vorprogrammierten Ablauf nicht berücksichtigt werden. Andererseits führen die sehr hohen eingeplanten zeitlichen Reserven dazu, dass zwar die Betriebssicherheit für diese Vorgänge erhöht wird, andererseits aber das Einsparpotential nicht vollständig realisiert wird.

Ein weiteres Problem besteht darin, dass viele Komponenten beim Einschalten bzw. während eines Hochlaufs einen erhöhten Energiebedarf aufweisen; dies betrifft beispielsweise Motoren und andere Geräte mit einem hohen Einschaltstrom. Bei einer gleichzeitigen Inbetriebnahme vieler solcher Komponenten treten Lastspitzen auf, die bei der Planung der Energieversorgung berücksichtigt werden müssen und die zudem zu einer temporär hohen Leistungsaufnahme der gesamten Automatisierungsanordnung führen können, wobei seitens vieler Energieversorger höhere Nutzungsentgelte in Rechnung gestellt werden, wenn eine höhere Maximalleistung eingeplant und zur Verfügung gestellt werden muss.

Die Druckschrift DE 41 33 980 A1 - Löffel et al. "Automatische Steuerung für eine Kraftwerksanlage" schlägt vor, eine Automatisierungsanordnung in funktional voneinander unabhängige Teile zu gliedern und diese beim Anfahren einer Anlage getrennt zu berücksichtigen.

Die Veröffentlichung DE 10 2008 001 777 A1 - Strink et al. "Verfahren und Anordnung zur Steuerung einer Fertigungslinie" befasst sich mit dem sicheren Hochfahren einer Automatisierungsanordnung, wobei vorgeschlagen wird, die zeitliche Abfolge beim Hoch- oder Herunterfahren einer Anzahl von Automatisierungskomponenten energetisch zu optimieren.

Es ist also eine Aufgabe der vorliegenden Erfindung, eine temporäre Außerbetriebnahme einer Automatisierungsanordnung oder eines Teils einer Automatisierungsanordnung betriebssicherer und wirtschaftlicher durchzuführen.

Zur Lösung dieser Aufgabe ist es ein zentraler Gedanke, dass ein Anwender zunächst die technologischen Abhängigkeiten zwischen den einzelnen Komponenten einer Automatisierungsanord nung projektiert. Diese Projektierung gibt den möglichen Rahmen für die Optimierung, die später erfindungsgemäß zur Laufzeit erfolgt, fest. Es ist ein weiterer zentraler Gedanke der vorliegenden Erfindung, dass bei Deaktivierungs- und Inbetriebnahmevorgängen die von den einzelnen Komponenten tatsächlich benötigten Deaktivierungs- und Hochlaufzeiten erfasst werden, um für spätere Deaktivierungsvorgänge die zeitliche Abfolge ("Timing") zu verbessern. Ein weiterer zentraler Gedanke der Erfindung besteht darin, dass zur Laufzeit der Automatisierungsanordnung beispielsweise bei einem Wiederinbetriebnahme-Vorgang die beim Hochlauf der einzelnen Komponenten jeweils benötigte Leistung und die für die Automatisierungsanordnung verfügbare Leistung zu berücksichtigen, um Lastspitzen zu vermeiden.

Die Lösung der Aufgabe sieht insbesondere ein Verfahren zur automatischen Inbetriebnahme und/oder Deaktivierung von Komponenten einer industriellen Automatisierungsanordnung gemäß dem Patentanspruch 1 vor.

Dabei wird ein Verfahren zur automatischen Inbetriebnahme und/oder Deaktivierung von Komponenten einer industriellen Automatisierungsanordnung vorgeschlagen, wobei zumindest eine industrielle Steuerungseinrichtung zur programmgesteuerten Inbetriebnahme und/oder Deaktivierung der Komponenten vorgesehen ist. Dabei wird in einer Projektierungsphase für zumindest eine der Komponenten zumindest eine die Inbetriebnahme und/oder Deaktivierung betreffende Abhängigkeit von einem Betriebzustand zumindest einer weiteren der Komponenten festgelegt, wobei in einer Betriebsphase der Automatisierungsanordnung eine Inbetriebnahme und/oder eine Deaktivierung der zumindest einen der Komponenten automatisch unter Berücksichtigung der festgelegten Abhängigkeit und eines jeweils aktuellen Betriebszustandes zumindest der zweiten der Komponenten vorgenommen wird. Erfindungsgemäß wird in der Projektirungsphase für die zumindest eine Komponente eine für die Inbetriebnahme er forderliche Mindestzeit festgelegt, wobei diese Mindestzeit in der Betriebsphase automatisch bei der Bestimmung des Zeitpunktes der Inbetriebnahme dieser Komponente berücksichtigt wird; selbiges gilt ggf. für die Deaktivierung der Komponente, wobei dann in der Betriebsphase beispielsweise eine Maximalzeit berücksichtigt werden kann. So kann im letzteren Fall beispielsweise in einem Fall, in dem eine Sicherheitsvorrichtung erst dann abgeschaltet werden darf, wenn ein sich bewegendes Anlagenteil zum vollständigen Stillstand gekommen ist, auch eine Mindestzeit für die Außerbetriebsetzung des beweglichen Anlagenteils vorgegeben werden, wobei diese Mindestzeit sicher ausreicht, um auch bei widrigen äußeren Umständen einen vollständigen Stillstand des sicherheitsrelevanten beweglichen Teiles zu gewährleisten. Zur Optimierung des zeitlichen Ablaufs wird erfindungsgemäß zumindest bei einer Inbetriebnahme und/oder Deaktivierung der zumindest einen Komponente die tatsächlich für die Inbetriebnahme und/oder Deaktivierung benötigte Zeitdauer erfasst, wobei die erfasste Zeitdauer zur Korrektur der während der Projektierungsphase vorgegebenen Mindestzeit verwendet wird. Durch dieses Verfahren ist es möglich, anstelle eines starren zeitlichen Rahmens und eines vorgeplanten, starren zeitlichen Ablaufs einen Deaktivierungsvorgang und/oder einen Inbetriebnahmevorgang zur Laufzeit "dynamisch" an den jeweiligen Betriebszuständen auszurichten und somit situationsabhängig zu optimieren. Das Einplanen allzu großer Sicherheiten in einem zeitlichen Ablauf kann somit vermieden werden, wodurch eine Deaktivierung bzw. Inbetriebnahme zügiger ausgeführt werden kann und somit ein höherer Einspareffekt durch eine längere tatsächliche Pausenzeit erzielt werden kann.

Vorteilhafte Ausgestaltungen des erfindungsgemäßen Verfahrens sind in den abhängigen Patentansprüchen angegeben. Die dabei beschriebenen Merkmale und Vorteile können entweder einzeln, aber auch in Kombination miteinander verwirklicht werden.

Ggf. kann zu der erfassten Zeitdauer noch ein Sicherheitswert jeweils hinzu addiert bzw. abgezogen werden, um eine zeitliche Streuung zu berücksichtigen. Vorteilhaft ist die vorgegebene Mindestzeit bzw. eine vorgegebenen Maximalzeit in einer Gerätebeschreibungsdatei der zumindest einen Komponente gespeichert, wobei ggf. der korrigierte Wert, der aus einer tatsächlichen Inbetriebnahme und/oder Deaktivierung gewonnen wird, vorteilhaft zur Korrektur der Gerätebeschreibungsdatei eingesetzt werden kann, um bei einer späteren Projektierung von Komponenten desselben Typs mit realistischen Werten zu starten. Andererseits kann der korrigierte Wert auch lediglich in die vorliegende Projektierung oder sogar nur für die laufende Betriebsphase der Automatisierungsanordnung verwendet werden, um ungewünschte Auswirkungen auf andere Einsatzfälle zu vermeiden.

Zur Vermeidung von ungewollten Lastspitzen bzw. für ein Lastmanagement ist es vorteilhaft, wenn in der Projektierungsphase für mehrere der Komponenten jeweils zumindest eine Angabe über die während der Inbetriebnahme auftretende maximale Leistungsaufnahme und zumindest ein Grenzwert für eine erlaubte maximale Leistungsaufnahme der gesamten Automatisierungsanordnung oder zumindest für einen die mehreren Komponenten umfassenden Teil der Automatisierungsanordnung vorgegeben wird. Dabei wird vorteilhaft in der Betriebsphase eine aktuelle Leistungsaufnahme der Automatisierungsanordnung oder zumindest des betrachteten Teils der Automatisierungsanordnung erfasst, wobei aus dem Grenzwert, aus den vorgegebenen Angaben und aus einem Messwert für die aktuelle Leistungsaufnahme die Reihenfolge und die Zeitpunkte der Inbetriebnahme oder ggf. auch der Deaktivierung errechnet werden. Die vorgegebenen Werte, die beispielsweise in einer Gerätebeschreibungsdatei gespeichert werden können, können durch tatsächliche Messwerte ersetzt oder optimiert werden, analog zu dem Verfahren bei den Angaben zu den Mindest- bzw. Maximalzeiten für die Inbetriebnahme bzw. Deaktivierung.

Eine bessere Kontrolle durch ein Überwachungspersonal bzw. durch eine Überwachungseinrichtung ist gegeben, wenn in der Betriebsphase durch die zentrale Steuerungseinrichtung ein Ablaufplan für die automatische Inbetriebnahme und/oder für die automatische Deaktivierung erstellt wird, wobei dieser Ablaufplan bei sich ändernden Randbedingungen bezüglich der aktuellen Leistungsaufnahme, bezüglich der in Betrieb zu setzenden und/oder zu deaktivierenden Komponenten, bezüglich der tatsächlich benötigten Hochlauf- und Außerbetriebssetzungszeiten oder bezüglich des Grenzwertes automatisch "dynamisch" angepasst wird.

Eine besonders einfache Projektierung ergibt sich, wenn in der Projektierungsphase die Abhängigkeiten mittels einer Abhängigkeitsmatrix definiert und in ein Projektierungssystem eingegeben werden. Dabei können die gegenseitigen Abhängig keiten in übersichtlicher Weise graphisch in einem zweidimensionalen Diagramm visualisiert und bearbeitet werden.

Ein Ausführungsbeispiel des erfindungsgemäßen Verfahrens wird nachfolgend anhand der Zeichnungen erläutert.

Dabei zeigen:
- Figur 1: ein einfaches Ausführungsbeispiel einer Automatisierungsanordnung bzw. eines Teils einer Automatisierungsanordnung mit einem mechanischen Förderer, und
- Figur 2: die Abhängigkeiten mit den zeitlichen Randbedingungen für eine temporäre Außerbetriebsetzung der gezeigten Anordnung.

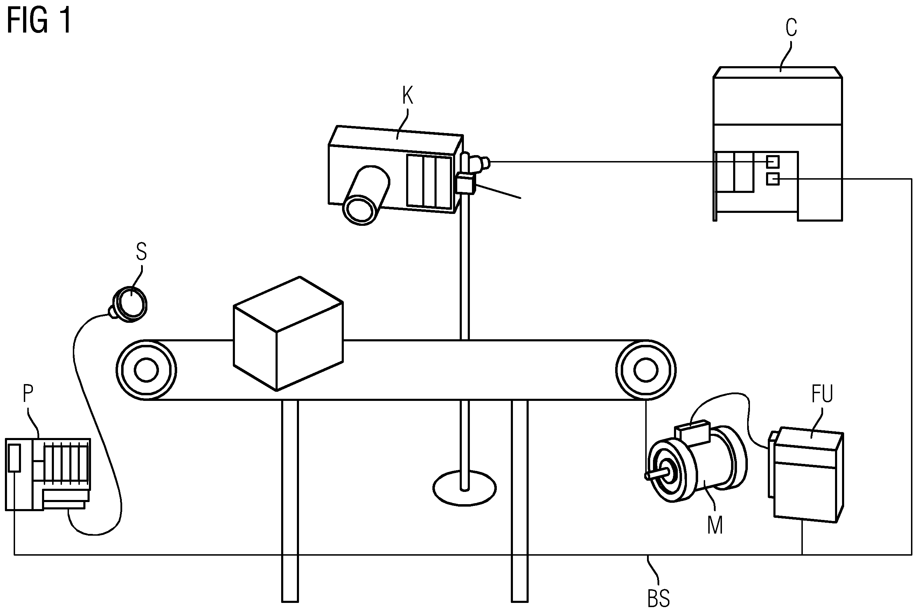

Der in der Figur 1 schematisch dargestellte Förderer besteht aus einem Motor M, dessen Drehzahl und damit die Geschwindigkeit des Förderers über einen Frequenzumrichter FU geregelt wird. Dieser Frequenzumrichter FU ist über ein Bus-System BS, beispielsweise Profinet IO, mit anderen Komponenten der Automatisierungsanordnung verbunden. So ist an dem Bus-System BS ein Peripheriesystem P angebunden, an dem der Näherungsschalter S angeschlossen ist. Ebenfalls sind an dem Bus-System BS ein Kamerasystem K und die Steuerungseinrichtung C ("Controller") angeschlossen. Der Frequenzumrichter FU kann beispielsweise über ein Befehlsprotokoll (z.B. PROFIenergy) des Bus-Systems BS in einen Energiesparmodus versetzt werden, wobei dessen Zwischenkreis abgeschaltet wird. Das Kamerasystem K überwacht die Qualität von Produkten auf dem Förderband. Der Näherungsschalter S ist zur Erfassung von Produkten am Anfang des Förderbandes positioniert. Der gezeigte Förderer wird durch die Steuerungseinrichtung C gesteuert. Die einzelnen Komponenten lassen sich beispielsweise mittels der im PROFIenergy-Protokoll bekannten Kommandos wie "Start_Pause" oder "End_Pause" oder äquivalenten Kommandos anderer Protokolle aktivieren bzw. deaktivieren. Der Einfachheit halber soll auf das genaue technologische Zusammenwirken der hier gezeigten Komponenten, also auf die eigentliche Steuerungslogik, nicht näher eingegangen werden, da sie für die prinzipielle Funktion des hier vorgestellten Verfahrens und den nachfolgend beschriebenen "Task Planer" unerheblich sind.

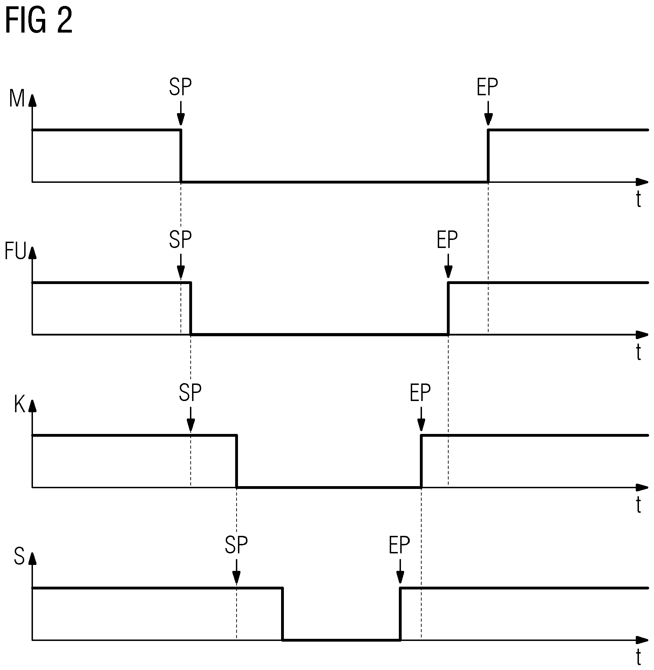

In der Figur 2 ist schematisch der prinzipielle zeitliche Ablauf für eine Betriebspause für die Komponenten Motor M, Frequenzumrichter MU, Kamerasystem K und Näherungsschalter S dargestellt. Für jede dieser gezeigten Komponenten ist ein Abschaltzeitpunkt SP (Start_Pause) und ein Einschaltpunkt EP (End_Pause) definiert, wobei sich die Zeitpunkte SP, EP jeder abhängigen Komponente aus den entsprechenden Zeitpunkten der vorhergehenden Komponente ergeben.

Zu Beginn einer Pause wird das Förderband angehalten. Dazu wird der Motor M zum diesen zugeordneten Zeitpunkt SP ausgeschaltet und zum Zeitpunkt EP wieder eingeschaltet.

Gemäß dem im Stand der Technik üblichen Vorgehen würden während der Betriebspause des Motors M der Frequenzumrichter FU, das Kamerasystem K und der Näherungsschalter S weiterhin in Betrieb bleiben, somit weiter mit Energie versorgt werden und somit auch weiterhin Energie konsumieren.

Beim im Folgenden diskutierten erfindungsgemäßen Vorgehen soll davon ausgegangen werden, dass zwischen Näherungsschalter S, Kamerasystem K und Motor M Abhängigkeiten bestehen, die besagen, dass der Frequenzumrichter FU erst nach vollständigen Stillstand des Motors M abgeschaltet werden kann, und vor dem Wiedereinschalten des Motors M schon eine bestimmte Zeit lang in Betrieb sein muss, also vorher hochgefahren sein muss. Ebenfalls soll angenommen werden, dass das Kamerasystem K mit gewissem zeitlichen Nachgang zu dem Frequenzumrichter FU abgeschaltet werden soll, und mit einem Vorlauf vor dem Frequenzumrichter FU wieder hochgefahren bzw. eingeschaltet werden muss. In gleicher Weise ist das Abschalten und Wiedereinschalten des Näherungsschalters S bzw. der Peripherieeinheit P zeitlich vom Kamerasystem K mit entsprechenden Nachlauf- bzw. Vorlaufzeiten abhängig. Zum Abschalten bzw. Wiedereinschalten der Sensorik ist also eine zeitliche Reihenfolge einzuhalten, die beispielsweise in einem sog. "Task Planer" gemäß der Figur 2 oder in einer - nicht dargestellten - "Cause-Effect-Matrix" (CEM-Matrix) definiert werden kann. Die Nachlauf- bzw. Vorlaufzeiten, die für die einzelnen Komponenten (Frequenzumrichter FU, Kamerasystem K, Näherungsschalter S einzuhalten sind, sind jeweils in einer gerätespezifischen Beschreibungsdatei, einer sog. GSDML-Datei, hinterlegt. Solche Geräte-Beschreibungsdateien sind für industrielle Automatisierungskomponenten üblich. Die darin beschriebenen Zeiten werden erfindungsgemäß von der Steuerungseinrichtung C bei der Errechnung der Ausschaltzeitpunkte SP bzw. Einschaltpunkte EP berücksichtigt, ebenso werden die durch den "Task Planer" oder durch die Cause-Effect-Matrix oder auf eine andere Weise projektierten Abhängigkeiten automatisch mit der Maßgabe berücksichtigt, dass sich für jede Komponente eine längstmögliche Pausenzeit und damit eine höchstmögliche Energieeinsparung ergibt.

Erfindungsgemäß wird nach dem "Stop"-Befehl, der an den Motor M gesendet wird, die Drehzahl des Motors M als Betriebszustand dieser Komponente überwacht, wobei sofort nach dessen Stillstand der Frequenzumrichter FU abgeschaltet wird.

Im Folgenden sei angenommen, dass die dargestellte Anordnung mit dem Förderer aus einer ganzen Anzahl von Förderbändern mit mehreren Motoren besteht; dieser Fall ist in den Figuren 1 und 2 nicht dargestellt. Weiter sei angenommen, dass der Einschaltstrom jedes der Motoren ein Vielfaches, beispielsweise das 5-fache, des im laufenden Betrieb aufgenommenen Stromes beträgt. Dabei sind die sog. "Nennströme" und die "Einschaltströme" jeweils in den Beschreibungsdateien der Motoren verzeichnet. Ebenso sei angenommen, dass der erhöhte Einschaltstrom jeweils für die Dauer des Hochlaufs, also für die in der Gerätebeschreibungsdatei spezifizierte Hochlaufzeit zu berücksichtigen ist. Die Steuerungseinrichtung C ist erfindungsgemäß zur Berücksichtigung der Einschaltströme, zur Berücksichtigung eines maximal erlaubten Grenzwertes für die gesamte Stromaufnahme aller Motoren und in einer vorteilhaften Ausgestaltung zur Messung der tatsächlichen Last, also zur Messung des tatsächlich aufgenommenen Stroms, eingerichtet; in einer alternativen Ausführungsform kann die tatsächliche Stromaufnahme jedoch auch aus den erfassten Betriebszuständen (Motor lauf/Motor aus) errechnet werden. Die Steuerungseinrichtung C koordiniert den Einschaltzeitpunkt EP eines jeden Motors so, dass sich keine Kumulation der erhöhten Einschaltströme derart ergibt, dass der vorgegebene Grenzwert überschritten wird. So kann es beispielsweise erforderlich sein, alle verfügbaren Motoren nacheinander einzuschalten, d.h., dass der Hochlauf eines ersten Motors abgewartet werden muss, bevor der nächste Motor eingeschaltet wird. Dabei wird als Betriebszustand der vom ersten Motor aufgenommene Strom überwacht, wobei zu dem Zeitpunkt, zu dem die Stromaufnahme auf das Niveau des Nennstroms zurückgefallen ist, der nächste Motor angefahren wird.

Im Extremfall muss dabei der Motor mit dem höchsten Einschaltstrom zuerst hochlaufen, bevor die nachfolgenden Motoren eingeschaltet werden können. Andererseits kann es sinnvoll sein, wenn möglich den Motor mit der höchsten Stromaufnahme als letztes hochzufahren, sofern die dann auftretende Lastspitze in Summe mit der bestehenden Last den erlaubten Grenzwert nicht überschreitet. Das "Timing" und die Einschaltreihenfolge kann dabei je nach aktuellem Betriebszustand der gesamten Automatisierungsanordnung und je nach wechselndem vorgegebenen Grenzwert variieren, wobei weiterhin die gegenseitigen Abhängigkeiten und die Betriebszustände der einzelnen Komponenten berücksichtigt werden können.

Die tatsächlichen Einschaltströme der Motoren können ebenso wie die benötigten Einschalt- und Ausschaltzeiten der Komponenten bei einem oder bei vielen oder allen Inbetriebnahme bzw. Außerbetriebnahme-Vorgängen erfasst bzw. gemessen werden, so dass nachfolgende Betriebspausen mit optimierten Wer ten geplant werden können. Dabei kann jeweils bezogen auf die gemessenen Daten ein Sicherheitswert addiert, subtrahiert bzw. ein Sicherheitsfaktor in Ansatz gebracht werden.

## Patentansprüche

1. Verfahren zur automatischen Inbetriebnahme und/oder Deaktivierung von Komponenten (M, FU, K, S) einer industriellen Automatisierungsanordnung,
wobei zumindest eine industrielle Steuerungseinrichtung (C) zur programmgesteuerten Inbetriebnahme und/oder Deaktivierung der Komponenten (M, FU, K, S) vorgesehen ist,
wobei in einer Projektierungsphase für zumindest eine der Komponenten (M, FU, K, S) zumindest eine die Inbetriebnahme und/oder Deaktivierung betreffende Abhängigkeit von einem Betriebszustand zumindest einer weiteren der Komponenten (M, FU, K, S) festgelegt wird,
wobei in einer Betriebsphase der Automatisierungsanordnung eine Inbetriebnahme und/oder eine Deaktivierung der zumindest einen der Komponenten (M, FU, K, S) automatisch unter Berücksichtigung der festgelegten Abhängigkeit und eines jeweils aktuellen Betriebszustands zumindest der zweiten der Komponenten (M, FU, K, S) vorgenommen wird, und
wobei in der Projektierungsphase für die zumindest eine Komponente (M, FU, K, S) eine für die Inbetriebnahme erforderliche Mindestzeit festgelegt wird, wobei diese Mindestzeit in der Betriebsphase automatisch bei einer Bestimmung des Zeitpunktes der Inbetriebnahme dieser Komponente (M, FU, K, S) berücksichtigt wird,
**dadurch gekennzeichnet,**
**dass** zumindest bei einer Inbetriebnahme und/oder Deaktivierung der zumindest einen Komponente (M, FU, K, S) die tatsächlich für die Inbetriebnahme und/oder Deaktivierung benötigte Zeitdauer erfasst wird, wobei die erfasste Zeitdauer zur Korrektur der während der Projektierungsphase vorgegebenen Mindestzeit verwendet wird.

2. Verfahren nach Patentanspruch 1,
**dadurch gekennzeichnet,**
**dass** die vorgegebene Mindestzeit in einer Gerätebeschreibungsdatei der zumindest einen Komponente (M, FU, K, S) gespeichert wird.

3. Verfahren nach einem der vorhergehenden Patentansprüche,
**dadurch gekennzeichnet,**
**dass** in der Projektierungsphase für mehrere der Komponenten (M, FU, K, S) jeweils zumindest eine Angabe über die während der Inbetriebnahme auftretende maximale Leistungsaufnahme und zumindest ein Grenzwert für eine erlaubte maximale Leistungsaufnahme der gesamten Automatisierungsanordnung oder zumindest für einen die mehreren Komponenten (M, FU, K, S) umfassenden Teil der Automatisierungsanordnung vorgegeben wird, und
**dass** in der Betriebsphase eine aktuelle Leistungsaufnahme der Automatisierungsanordnung oder zumindest des Teils der Automatisierungsanordnung erfasst wird, wobei der Grenzwert, die vorgegebenen Angaben über die jeweilige maximale Leistungsaufnahme und die aktuelle Leistungsaufnahme bei der Festlegung von Reihenfolge und den Zeitpunkten der Inbetriebnahme der in Betrieb zu setzenden Komponenten (M, FU, K, S) berücksichtigt werden.

4. Verfahren nach Patentanspruch 3,
**dadurch gekennzeichnet,**
**dass** bei zumindest einer Inbetriebnahme und/oder Deaktivierung der zumindest einen Komponente (M, FU, K, S) die von dieser aufgenommene maximale Leistung erfasst und zur Korrektur der bezüglich dieser Komponente (M, FU, K, S) in der Projektierungsphase vorgegebenen Angabe über die maximale Leistungsaufnahme bei der Inbetriebnahme verwendet wird.

5. Verfahren nach Patentanspruch 3 oder 4,
**dadurch gekennzeichnet,**
**dass** die zumindest eine Angabe über die maximale Leistungsaufnahme jeweils in einer Gerätebeschreibungsdatei der zugehörigen Komponente (M, FU, K, S) gespeichert wird.

6. Verfahren nach einem der vorhergehenden Patentansprüche,
**dadurch gekennzeichnet,**
**dass** in der Betriebsphase durch die zentrale Steuerungseinrichtung (C) ein Ablaufplan für die automatische Inbetriebnahme und/oder Deaktivierung erstellt wird, wobei dieser Ablaufplan bei sich ändernden Randbedingungen bezüglich der aktuellen Leistungsaufnahme oder bezüglich der in Betrieb zu setzenden und/oder zu deaktivierenden Komponenten (M, FU, K, S) oder bezüglich des Grenzwertes automatisch angepasst wird.

7. Verfahren nach einem der vorhergehenden Patentansprüche,
**dadurch gekennzeichnet,**
**dass** in der Projektierungsphase die Abhängigkeiten mittels einer Abhängigkeitsmatrix definiert werden.

## Claims

1. Method for automatically commissioning and/or deactivating components (M, FU, K, S) of an industrial automation arrangement,
wherein at least one industrial controller (C) is provided for the program-controlled commissioning and/or deactivation of the components (M, FU, K, S),
wherein, for at least one of the components (M, FU, K, S), at least one dependency, relating to the commissioning and/or deactivation, on an operating state of at least one other of the components (M, FU, K, S) is defined in a planning phase, wherein commissioning and/or deactivation of the at least one of the components (M, FU, K, S) is performed automatically in an operating phase of the automation arrangement, taking into consideration the defined dependency and a respective current operating state at least of the second of the components (M, FU, K, S), and
wherein, in the planning phase, a minimum time required for the commissioning is defined for the at least one component (M, FU, K, S), wherein this minimum time is automatically taken into consideration in the operating phase when determining the time of the commissioning of this component (M, FU, K, S),
**characterized**
**in that** the duration actually required for the commissioning and/or deactivation is recorded at least when the at least one component (M, FU, K, S) is commissioned and/or deactivated, wherein the recorded duration is used to correct the minimum time predefined during the planning phase.

2. Method according to Patent Claim 1,
**characterized**
**in that** the predefined minimum time is stored in a device description file of the at least one component (M, FU, K, S).

3. Method according to either of the preceding patent claims,
**characterized**
**in that**, in the planning phase, in each case at least one specification about the maximum power consumption occurring during the commissioning and at least one limit value for a permitted maximum power consumption of the entire automation arrangement or at least for a part of the automation arrangement comprising the plurality of components (M, FU, K, S) is predefined for a plurality of the components (M, FU, K, S) and
**in that**, in the operating phase, a current power consumption of the automation arrangement or at least the part of the automation arrangement is recorded, wherein the limit value, the predefined specifications about the respective maximum power consumption and the current power consumption are taken into consideration when defining the order and times of the commissioning of the components (M, FU, K, S) to be put into operation.

4. Method according to Patent Claim 3,
**characterized**
**in that**, at least when the at least one component (M, FU, K, S) is commissioned and/or deactivated, the maximum power consumed thereby is recorded and is used to correct the specification, predefined in the planning phase in terms of this component (M, FU, K, S), about the maximum power consumption in the commissioning.

5. Method according to Patent Claim 3 or 4,
**characterized**
**in that** the at least one specification about the maximum power consumption is in each case stored in a device description file of the associated component (M, FU, K, S).

6. Method according to one of the preceding patent claims,
**characterized**
**in that**, in the operating phase, a schedule is created for the automatic commissioning and/or deactivation by the central controller (C), wherein this schedule is adjusted automatically in the event of changing boundary conditions in terms of the current power consumption or in terms of the components (M, FU, K, S) to be put into operation and/or deactivated or in terms of the limit value.

7. Method according to one of the preceding patent claims,
**characterized**
**in that** the dependencies are defined by way of a dependency matrix in the planning phase.

## Revendications

1. Procédé de mise en service et/ou de désactivation automatique d'éléments (M, FU, K, S) d'une installation d'automatisation industrielle,
dans lequel au moins un dispositif (C) de commande industriel est prévu pour la mise en service et/ou la désactivation commandée par programme des éléments (M, FU, K, S),
dans lequel, dans une phase de planification, on fixe, pour au moins l'un des éléments (M, FU, K, S), au moins une dépendance, concernant la mise en service et/ou la désactivation, d'un état de service d'au moins un autre des éléments (M, FU, K, S),
dans lequel, dans une phase de mise en service de l'installation d'automatisation, on effectue une mise en service et/ou une désactivation d'au moins l'un des éléments (M, FU, K, S) automatiquement, en tenant compte de la dépendance fixée et d'un état de service en cours d'au moins le deuxième des éléments (M, FU, K, S), et dans lequel, dans la phase de planification, on fixe, pour le au moins un élément (M, FU, K, S), un temps minimum nécessaire à la mise en service, ce temps minimum étant pris en considération dans la phase de service automatiquement lors d'une détermination de l'instant de la mise en service de cet élément (M, FU, K, S),
**caractérisé**
**en ce qu'**au moins, lors d'une mise en service et/ou d'une désactivation du au moins un élément (M, FU, K, S), on détecte la durée nécessaire effectivement pour la mise en service et/ou la désactivation, la durée détectée étant utilisée pour corriger le temps minimum donné à l'avance pendant la phase de planification.

2. Procédé suivant la revendication 1,
**caractérisé**
**en ce que** l'on mémorise le temps minimum donné à l'avance dans un fichier de description d'appareils du au moins un élément (M, FU, K, S).

3. Procédé suivant l'une des revendications précédentes,
**caractérisé**
**en ce que**, dans la phase de planification, on prescrit, pour plusieurs des éléments (M, FU, K, S), respectivement, au moins une indication sur la puissance absorbée maximum se produisant pendant la mise en service et au moins une valeur limite d'une puissance absorbée maximum autorisée de toute l'installation d'automatisation ou au moins pour une partie, comprenant les plusieurs éléments (M, FU, K, S), de l'installation d'automatisation, et
**en ce que**, dans la phase de service, on détecte une puissance absorbée en cours de l'installation d'automatisation ou de la partie du système d'automatisation, la valeur limite, les indications données à l'avance sur la puissance absorbée maximum et la puissance absorbée en cours étant prises en compte lors de la fixation de la succession et des instants de la mise en service des éléments (M, FU, K, S) à mettre en service.

4. Procédé suivant la revendication 3,
**caractérisé**
**en ce que**, lors d'au moins une mise en service et/ou d'une désactivation du au moins un élément (M, FU, K, S), on détecte la puissance maximum absorbée par celui-ci et, pour la correction, on utilise, lors de la mise en service, l'indication donnée à l'avance dans la phase de planification en ce qui concerne cet élément (M, FU, K, S) sur la puissance absorbée maximum.

5. Procédé suivant la revendication 3 ou 4,
**caractérisé**
**en ce que** l'on met en mémoire la au moins une indication sur la puissance absorbée maximum, respectivement, dans un fichier de description d'appareils de l'élément (M, FU, K, S) concerné.

6. Procédé suivant l'une des revendications précédentes,
**caractérisé**
**en ce que**, dans la phase de service, on établit, par le dispositif (C) central de commande, un plan de déroulement de la mise en service et/ou de la désactivation automatique, ce plan de déroulement étant adapté automatiquement à des conditions limites variables concernant la puissance absorbée en cours ou concernant les éléments (M, FU, K, S) à mettre en service et/ou à désactiver ou concernant la valeur limite.

7. Procédé suivant l'une des revendications précédentes,
**caractérisé**
**en ce que**, dans la phase de planification, on définit les dépendances au moyen d'une matrice de dépendance.
